(19)

Europäisches Patentamt
European Patent Office
Office européen des brevets

(11) **EP 4 455 723 A1**

(12) **EUROPEAN PATENT APPLICATION**
published in accordance with Art. 153(4) EPC

(43) Date of publication:
**30.10.2024 Bulletin 2024/44**

(21) Application number: **22911133.1**

(22) Date of filing: **16.12.2022**

(51) International Patent Classification (IPC):
**G01S 7/497** $^{(2006.01)}$   **G01C 3/06** $^{(2006.01)}$
**G01S 17/06** $^{(2006.01)}$   **G01S 17/89** $^{(2020.01)}$

(52) Cooperative Patent Classification (CPC):
**G01C 3/06; G01S 7/497; G01S 17/06; G01S 17/89**

(86) International application number:
**PCT/JP2022/046465**

(87) International publication number:
**WO 2023/120430 (29.06.2023 Gazette 2023/26)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **23.12.2021 JP 2021209273**

(71) Applicants:
• **Pioneer Corporation**
**Tokyo 113-0021 (JP)**

• **Pioneer Smart Sensing Innovations Corporation**
**Tokyo 113-0021 (JP)**

(72) Inventors:
• **YAJIMA, Hiromi**
**Kawagoe-shi, Saitama 350-8555 (JP)**
• **TAKEMURA, Itaru**
**Kawagoe-shi, Saitama 350-8555 (JP)**

(74) Representative: **Viering, Jentschura & Partner mbB**
**Patent- und Rechtsanwälte**
**Am Brauhaus 8**
**01099 Dresden (DE)**

(54) **INFORMATION PROCESSING DEVICE, CONTROL METHOD, PROGRAM, AND STORAGE MEDIUM**

(57)    The information processing device 1 functions as an information processing device equipped with an acquisition unit, an evaluation value calculation unit, and a noise determination unit. The acquisition unit acquires point cloud data which is a set of data for each point measured by a measurement device. The evaluation value calculation unit calculates a noise evaluation value for each data of the point cloud data, based on a noise evaluation function for evaluating whether each point is an object point, which is a measured point of an object, or a noise point, which is generated by noise. The threshold value setting unit sets a threshold value for the noise evaluation value, based on a statistic of a probability density function of the noise evaluation function. The noise determination unit determines the noise point in the point cloud data, based on the noise evaluation value and the threshold value.

FIG. 3

**Description**

TECHNICAL FIELD

The present disclosure relates to processing of measured data.

BACKGROUND

Conventionally, there is known a ranging device configured to radiate a light to a target object of measurement to detect the reflected light from the target object of measurement, and thereby calculate the distance to the target object of measurement based on the time difference between the timing of radiating the light to the target object of measurement and the timing of detecting the reflected light from the target object of measurement. For example, Patent Literature 1 discloses a noise determination method for determining noise points generated by noise based on the temporal or spatial stability at each measured point indicated by point cloud data obtained by a lidar.

PRIOR ART DOCUMENTS

PATENT LITERATURE

Patent Literature 1: JP2021-43838A

SUMMARY

PROBLEM TO BE SOLVED BY THE INVENTION

The noise points generated by noise are measured with approximately a constant probability, and object points representing an object tend to be measured with a lower ranging probability as the distance increases. Then, if the object exists at a distance, or the object originally has a low reflection intensity, the ranging probability of the object points will decrease. In this case, it becomes difficult to discriminate the noise points from the object points.

The present disclosure has been made to solve the above issues, and it is an object of the present invention to provide an information processing device, a control method, a program, and a storage medium storing the program, capable of determining noise points generated by noise.

MEANS FOR SOLVING THE PROBLEM

One invention is an information processing device including:

an acquisition unit configured to acquire point cloud data which is a set of data for each point measured by a measurement device;
an evaluation value calculation unit configured to calculate an evaluation value for each data of the point cloud data, based on an evaluation function for evaluating whether the each point is an object point, which is a measured point of an object, or a noise point, which is generated by noise;
a threshold value setting unit configured to set a threshold value for the evaluation value, based on a statistic of a probability density function of the evaluation function; and
a noise determination unit configured to determine the noise point included in the point cloud data, based on the evaluation value and the threshold value.

Another invention is a control method executed by a computer, the control method including:

acquiring point cloud data which is a set of data for each point measured by a measurement device;
calculating an evaluation value for each data of the point cloud data, based on an evaluation function for evaluating whether the each point is an object point, which is a measured point of an object, or a noise point, which is generated by noise;
setting a threshold value for the evaluation value, based on a statistic of a probability density function of the evaluation function; and
determining the noise point included in the point cloud data, based on the evaluation value and the threshold value.

Still another invention is a program causing a computer to:

acquire point cloud data which is a set of data for each point measured by a measurement device;
calculate an evaluation value for each data of the point cloud data, based on an evaluation function for evaluating whether the each point is an object point, which is a measured point of an object, or a noise point, which is generated by noise;
set a threshold value for the evaluation value, based on a statistic of a probability density function of the evaluation function; and
determine the noise point included in the point cloud data, based on the evaluation value and the threshold value.

BRIEF DESCRIPTION OF THE DRAWINGS

[FIG. 1] It shows a schematic configuration of a lidar according to a first embodiment.
[FIG. 2] It is a graph showing a probability density function of a noise evaluation function.
[FIG. 3] It is an example of a flowchart of the point cloud information process according to the first embodiment.
[FIGS. 4A and 4B] FIG. 4A illustrates a target point of the current frame whose reflection intensity value is less than a threshold value and its neighboring measured points on a virtual plane.
FIG. 4B illustrates a target point of the current frame whose reflection intensity value is equal to or larger than the threshold value and its neighboring measured points on a virtual plane.
[FIG. 5] It is an example of a flowchart of a noise point determination process according to a second embodiment.
[FIG. 6] It is another example of a flowchart of the noise point determination process according to the second embodiment.
[FIG. 7] It is a diagram representing the arrangement of sample points with respect to a historical target point determined based on a first method.
[FIGS. 8A and 8B] FIG. 8A is a diagram showing the arrangement of the sample points with respect to a historical target point determined based on a second method
FIG. 8B is a diagram showing the arrangement of the sample points with respect to a historical target point determined based on a third method.
[FIG. 9] It is an example of a flowchart showing the procedure of the noise point determination process according to a third embodiment.
[FIG. 10] It is a configuration diagram of a lidar system according to a fourth embodiment.

DETAILED DESCRIPTION OF PREFERRED EMBODIMENTS

According to a preferred embodiment of the present invention, the information processing device includes: an acquisition unit configured to acquire point cloud data which is a set of data for each point measured by a measurement device; an evaluation value calculation unit configured to calculate an evaluation value for each data of the point cloud data, based on an evaluation function for evaluating whether the each point is an object point, which is a measured point of an object, or a noise point, which is generated by noise; a threshold value setting unit configured to set a threshold value for the evaluation value, based on a statistic of a probability density function of the evaluation function; and a noise determination unit configured to determine the noise point included in the point cloud data, based on the evaluation value and the threshold value. The information processing device according to this aspect sets the threshold value for the evaluation value based on the evaluation function in consideration of the probability density function of the evaluation function, which allows for an accurate determination of the noise point.

In one aspect of the information processing device, the threshold setting unit is configured to set the threshold value based on an average and variance of the probability density function. According to this aspect, the information processing device can suitably determine the threshold value for the evaluation value based on the evaluation function, in consideration of the probability density function of the evaluation function.

In another aspect of the information processing device, the point cloud data is a set of data representing a measurement distance for the each point, wherein the evaluation function is a function which outputs the evaluation value based on a difference in the measurement distance, a difference in a measurement direction, and a difference in a measurement time between the each point of the point cloud data for calculating the evaluation value and a point of the point cloud data other than the each point. By using such an evaluation function, the information processing device can calculate an evaluation value which allows for accurately evaluating whether it is a noise point or an object point.

In another aspect of the information processing device, the evaluation value calculation unit is configured to calculate the evaluation value based on a current frame which is the point cloud information acquired by the acquisition unit at a current processing time, a past frame which is the point cloud information acquired by the acquisition unit at a time before the current processing time, and the evaluation function. According to this aspect, the information processing device can calculate an evaluation value which allows for accurately evaluating whether it is a noise point or an object point.

In still another aspect of the information processing device, the information processing device further includes a storage unit configured to store the statistic, wherein the threshold setting unit is configured to set the threshold value based on the statistic stored in the storage unit. According to this aspect, the information processing device can suitably set a threshold value based on the statistic of the probability density function of the evaluation function.

In still another aspect of the information processing device, the information processing device further includes a statistic calculation unit configured to calculate the statistic based on the point cloud information generated when there is no object in a measurement range of the measurement device. According to this aspect, the information processing device can suitably acquire the statistic of the probability density function of the evaluation function to be used in setting the threshold value.

In another preferred embodiment of the present invention, a control method executed by the information processing device includes: acquiring point cloud data which is a set of data for each point measured by a measurement device; calculating an evaluation value for each data of the point cloud data, based on an evaluation function for evaluating whether the each point is an object point, which is a measured point of an object, or a noise point, which is generated by noise; setting a threshold value for the evaluation value, based on a statistic of a probability density function of the evaluation function; and determining the noise point included in the point cloud data, based on the evaluation value and the threshold value. By executing the control method, the information processing device can accurately determine the noise point.

In another preferred embodiment of the present invention, a program causing a computer to: acquire point cloud data which is a set of data for each point measured by a measurement device; calculate an evaluation value for each data of the point cloud data, based on an evaluation function for evaluating whether the each point is an object point, which is a measured point of an object, or a noise point, which is generated by noise; set a threshold value for the evaluation value, based on a statistic of a probability density function of the evaluation function; and determine the noise point included in the point cloud data, based on the evaluation value and the threshold value. By executing this program, the computer can accurately determine the noise point. In some embodiments, the program is stored in a storage medium.

EMBODIMENTS

Hereinafter, preferred embodiments of the present invention are described below with reference to drawings.

<First Embodiment>

(1) Device Configuration

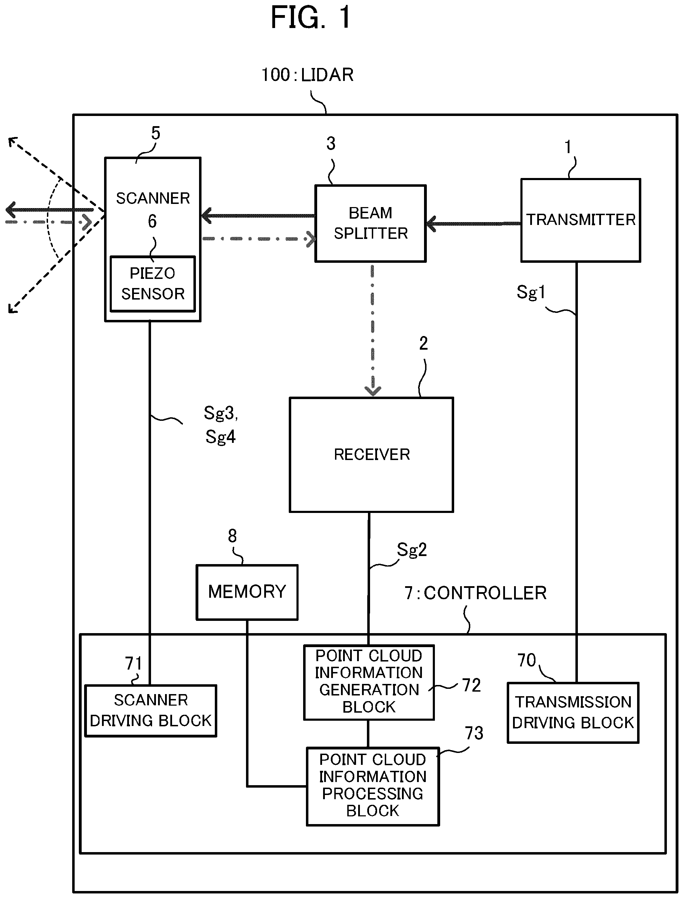

FIG. 1 shows a schematic configuration of a lidar 100 according to the first embodiment. The lidar 100 is, for example, mounted on a vehicle that performs driving support such as autonomous driving. The lidar 100 radiates the laser light with respect to a predetermined angle range in the horizontal and vertical directions, and by receiving the returned light (also referred to as "reflected light") which is the laser light reflected at the object, the lidar 100 discretely measures the distance from the lidar 100 to the object and generates point cloud information indicating three-dimensional positions of the object.

As shown in FIG. 1, the lidar 100 mainly includes a transmitter 1, a receiver 2, a beam splitter 3, a scanner 5, a piezo sensor 6, a controller 7, and a memory 8.

The transmitter 1 is a light source configured to emit a pulsed laser light toward the beam splitter 3. For example, the transmitter 1 includes an infrared laser emitting element. The transmitter 1 is driven based on the driving signal "Sg1" supplied from the controller 7.

The receiver 2 is, for example, an avalanche photodiode (Avalanche Photo-Diode), and generates a detection signal "Sg2" corresponding to the amount of received light, and supplies the generated detection signal Sg2 to the controller 7.

The beam splitter 3 is transparent to the pulsed laser light emitted from the transmission unit 1. In contrast, the beam splitter 3 reflects the light reflected by the scanner 5 toward the receiver 2.

The scanner 5 is, for example, a mirror (MEMS mirror) according to an electrostatic drive system, based on the driving signal "Sg3" supplied from the controller 7, the inclination (i.e., the optical scanning angle) of the scanner 5 is changed within a predetermined range. Then, the scanner 5 reflects the laser light, which passed through the beam splitter 3, toward the outside of the lidar 100, and reflects the reflected light incident from the outside of the lidar 100 toward the beam splitter 3. Further, a point or its measurement data measured through irradiation with the laser light within the measurement range of the lidar 100 is also referred to as "measured point".

The scanner 5 is also provided with the piezo sensor 6. The piezo sensor 6 detects the strain caused by the stress of the torsion bar which supports the mirror part of the scanner 5. The piezo sensor 6 supplies the generated detection signal "Sg4" to the controller 7. The detection signal Sg4 is used to detect the orientation of the scanners 5.

The memory 8 is configured by various volatile memories such as a RAM (Random Access Memory), a ROM (Read Only Memory), a flash memory, and a non-volatile memory. The memory 8 stores a program which is necessary for the controller 7 to execute a predetermined process. The memory 8 stores various parameters referred to by the controller 7. For example, the memory 8 stores information (also referred to as "probability density function information") regarding a probability density function of an evaluation function used in this embodiment. Further, the memory 8 stores point cloud information equivalent to a predetermined number of latest frames generated by the controller 7.

The controller 7 includes various processors such as a CPU (Central Processing Unit) and a GPU (Graphics Processing Unit). The controller 7 executes a program stored in the memory 8 to execute a predetermined process. The controller 7 is an example of a computer for executing a program. The controller 7 is not limited to be implemented by software using a program, it may be implemented by any combination of hardware, firmware, software and/or the like. The controller 7 may also be a user-programmable integrated-circuit, such as a FPGA (Field-Programmable Gate Array) and a microcontroller, an ASSP (Application Specific Standard Produce) and an ASIC (Application Specific Integrated Circuit).

The controller 7 functionally includes a transmission driving block 70, a scanner driving block 71, a point cloud information generation block 72, and a point cloud information processing block 73.

The transmission driving block 70 outputs a driving signal Sg1 for driving the transmitter 1. The driving signal Sg1 includes information regarding a light emission time of the laser light emitting element included in the transmitter 1 and information for controlling the emission intensity of the laser light emitting element. Based on the driving signal Sg1, the transmission driving block 70 controls the emission intensity of the laser light emitting element included in the transmitter 1.

The scanner driving block 71 outputs a driving signal Sg3 for driving the scanner 5. The driving signal Sg3 includes a horizontal driving signal corresponding to the resonant frequency of the scanner 5 and a vertical driving signal for vertical scanning. The scanner driving block 71 also detects the scan angle of the scanner 5 (i.e., the emission direction of the laser light) by monitoring the detection signal Sg4 outputted from the piezo sensor 6.

Based on the detection signal Sg2 supplied from the receiver 2, the point cloud information generation block 72 generates point cloud information indicative of, with respect to each measurement direction (i.e., emitting direction of the laser light), a distance (measurement distance) from the lidar 100 which is a reference point to an object irradiated with the laser light and a received light intensity (reflection intensity value) of the reflected light. In this case, the point cloud information generation block 72 calculates, as the time of flight (Time of Flight) of the light, the time from the emission of the laser light to the detection of the reflected light by the receiver 2. Then, the point cloud information generation block 72 generates point cloud information which indicates a set of points each corresponding to a combination of: the measurement distance in accordance with the calculated time of flight; the emitting direction (i.e., the measurement direction) of the laser light received as the reflected light by the receiver 2; and a reflection intensity value of the reflected light. Then, the point cloud information generation block 72 supplies the generated point cloud information to the point cloud information processing block 73. Hereafter, point cloud information obtained in one cycle of the scanning for all measured points is also referred to as a frame of point cloud information. The point cloud information can be regarded as an image, wherein each pixel of the image corresponds to each measurement direction and the pixel value of the each pixel is set as the reflection intensity value in the each measurement direction. In this case, pixels arranged in the vertical direction correspond to different emitting directions of the laser light in the elevation / depression angle and pixels arranged in the horizontal direction correspond to different emitting directions of the laser light in the horizontal angle. Then, for each pixel, based on a combination of the corresponding emitting direction and measurement distance, the coordinate value in the three-dimensional coordinate system with reference to the lidar 100 is obtained.

The point cloud information processing block 73 determines the noise data generated by erroneously detecting an object included in the point cloud information. Hereafter, measured points corresponding to the data generated by detecting an actual object are referred to as "object points", and measured points (i.e., measured points corresponding to the noise data) other than the object points are referred to as "noise points". To determine the noise point in the current frame, the point cloud information processing block 73 uses a frame (also referred to as a "current frame") of the point cloud information obtained at the current processing time and frame(s) (also referred to as "past frame") of the point cloud information obtained at processing time(s) before the current processing time.

In some embodiments, the point cloud information processing block 73 may delete the noise data corresponding to the determined noise points from the point cloud information, or may add flag information, which indicates whether each measured point falls under an object point or a noise point, to the point cloud information. Further, the point cloud information processing block 73 may supplies the processed point cloud information to an external device existing outside the lidar 100 or to any other processing block in the lidar 100 for performing obstacle detection or the like. In the former case, for example, the point cloud information may be outputted to a device (also referred to as "driving support device") configured to control the driving support such as autonomous driving of a vehicle. In this case, for example, based on the point cloud information, the control of the vehicle may be performed so as to avoid at least the obstacle points. For example, the driving support device may be an ECU (Electronic Control Unit) of the vehicle, or may be a vehicle-mounted device such as a car navigation device electrically connected to the vehicle. The point cloud information processing block 73 stores each frame of the point cloud information in the memory 8 in association with the time information indicating the processing time for each frame. The point cloud information processing block 73 according to the first embodiment is an example of an "evaluation value calculation unit", a "statistic calculation unit", a "threshold value setting unit", and a "noise determination unit". Further, the lidar 100 except for the point cloud information processing block 73 is an example of the "measurement device".

It is noted that the lidar 100 is not limited to a scan type lidar configured to scan the field of view with a laser light, and it may be a flash type lidar configured to generate three-dimensional data by diffusively radiating a laser light to the field of view of two-dimensional array structure sensor.

(2) Noise Determination Process

Next, a description will be given of the noise determination process which is the process of determining the noise points executed by the point cloud information processing block 73. In summary, for each measured point in the current frame, the point cloud information processing block 73 calculate an evaluation value using an evaluation function based on the difference in the measurement direction, measurement distance, and measurement time between the each measured point and measurement points adjacent thereto in time and space. Then, the point cloud information processing block 73 determines that any measured point having the evaluation value less than a threshold value is a noise point. In this case, the point cloud information processing block 73 determines the threshold value described mentioned above using a statistic of the probability density function of the evaluation function to thereby make an accurate determination of noise points in consideration of the detection rate of noise. Then, through a discrimination between a noise point and an object point with high accuracy, it generates point cloud information which allows for accurate detection of a distant object.

Hereafter, the above evaluation function is referred to as "noise evaluation function", the evaluation value for each measured point to be calculated based on the noise evaluation function is referred to as "noise evaluation value". In addition, a target measured point (i.e., the target of determination as to whether or not it is a noise point) of calculation of the noise evaluation value is referred to as "target point", and any measured point in the current frame and past frame(s) used for calculation of the noise evaluation value other than the target point is referred to as "reference point". The above-described threshold value for the noise evaluation value is also referred to as "threshold value Th".

(2-1) Noise Evaluation Function

First, a description will be given of the noise evaluation function. The noise evaluation function is a function to receive, as an input, the difference in the measurement distance (Euclidean distance) between the target point and the reference point, the frame interval (i.e., the difference in the measurement time) between the target point and the reference point, and the distance (i.e., the difference in the measurement direction) on the frame (image) between the target point and the reference point. Hereafter, the difference in the above-described measurement distance is referred to as "distance indicator", the above-described frame interval is referred to as "time indicator", and the above-described distance on the frame is referred to as "spatial indicator".

In the present embodiment, as an example of the noise evaluation function, the following expression (1), which uses the above-described distance indicator, time indicator and spatial indicator equally, is herein used, wherein the weights for the respective indicators can be determined by using coefficients (coefficients a to d). The point cloud information processing block 73 calculates the noise evaluation value according to the following expression (1) for each target point.

[Math 1]

$$\sum_{t}\sum_{h,v} 2^{-1*a*(rdist + b*t + (c \times dist \times \sin(0.4\pi h/360) + d \times dist \times \sin(0.8\pi v/360)))} \quad (1)$$

Here, "h" indicates an index (horizontal index) representing the horizontal position on the frame (i.e., on the two-dimensional coordinates of the image when the point cloud information is regarded as an image), "v" indicates an index (vertical index) representing the vertical position on the frame, and "t" indicates an index (frame index) representing the processing time for each frame cycle. Further, "dist" indicates the measurement distance of the target point, and "rdist" indicates the difference in the measurement distance between the target point and the reference point specified by the horizontal index h and the vertical index v. Further, "a" is a coefficient for controlling the overall value of the expression (1) and the ratio of the weights for the distance indicator and the time indicator and the spatial indicator, "b" is a coefficient for controlling the weight for the time indicator, "c" and "d" each is a coefficient for controlling the weight for the spatial indicator. In addition, "sin (0. 4πh / 360)" indicates an example of the point interval (horizontal scanning point interval) on the frame in the horizontal direction, and "sin (0. 8πh / 360)" indicates an example of the point interval (vertical scanning point interval) on the frame in the vertical direction.

In the expression (1), the exponential function with a base "2" is set as the noise evaluation function. Thus, it is possible to express a noise evaluation value while increasing the minute difference. In addition, by providing "-1" in the exponential portion of the noise evaluation function, the greater the distance indicator, time indicator, and/or spatial indicator is, the smaller the noise evaluation value becomes.

The value range of the horizontal index h and the vertical index v used in the expression (1) may cover the entire frame, or may be a predetermined value range on the frame around the target point (i.e. the range of predetermined measurement directions with reference to the measurement direction of the target point). Similarly, the value range of t used in the expression (1) may be set to the value range which covers each processing time of the current frame and all past frames which already have been obtained, or may be set to the value range (i.e., a predetermined measurement time range determined based on the current processing time) which covers each processing time of a predetermined number of the current frame and most recent past frames. By appropriately setting the search range, it is possible to reduce the calculation load while maintaining the determination accuracy of the noise points. The method of setting such a search range will be described in detail in the second embodiment and the third embodiment.

By using the noise evaluation function according to the expression (1), it is possible to treat the distance indicator, the time indicator, and the space index equally, to thereby increase the difference among these indices, and determine the respective weights using the coefficients a to d.

(2-2) Threshold Value Setting According to Probability Density Function

Next, a specific description will be given of the setting of the threshold value Th according to the probability density function of the noise evaluation function.

The noise points are generally measured with a constant probability at each measurement distance. Therefore, in the present embodiment, upon generating the point cloud information in a condition where there is no object within the measurement range (field of view) of the lidar 100, it is assumed that the output value (evaluation function value) of the noise evaluation function of each measurement distance follows the normal distribution according to the central limit theorem. In this case, by calculating the average "$\mu$" and variance "$\sigma$" of the probability density function of the noise evaluation function, it is possible to set a threshold value Th in accordance with the noise detection rate.

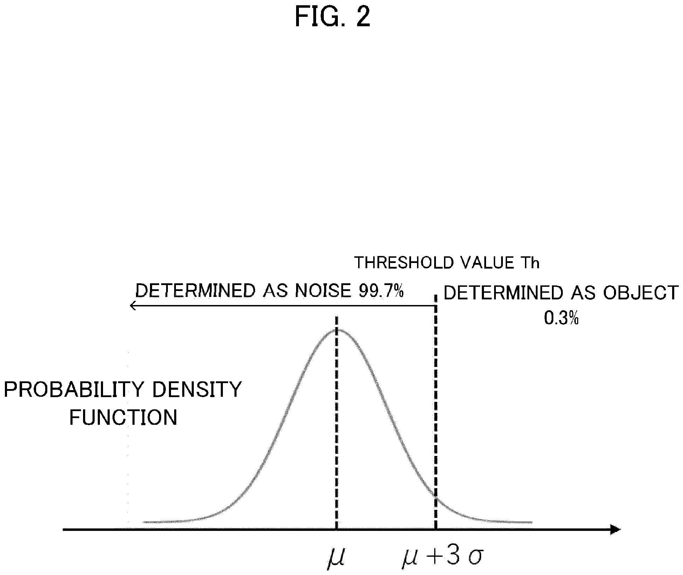

FIG. 2 is a graph showing the probability density function of the noise evaluation function. In this case, the probability density function of the noise evaluation function is modeled as being normally distributed. In this case, as an example, when "$\mu + 3\sigma$" is set as a threshold value Th, 99.7% of the noise points are correctly determined to be noise points. On the other hand, in this case, since 0.3% of the noise points are erroneously determined to be object points, the noise detection rate is 0.3%. Therefore, for example, when it is desired to set the noise-detection rate to 0.3%, it is sufficient to set "$\mu + 3\sigma$" as the threshold value Th. In addition, even when a target value of the noise detection rate is designated, the threshold value Th for realizing the target noise detection rate can be set using the average $\mu$ and the variance (strictly speaking, standard deviation) $\sigma$ in accordance with the nature of the normal distribution.

Next, a description will be given of the method of calculating the average $\mu$ and the variance (standard deviation) $\sigma$ will be supplemented.

Here, among the parameters of the noise evaluation function shown in the expression (1), the random variable is the point-to-point distance "rdist" (i.e., the difference in the measured distance between the target point and the reference point). Therefore, when a noise point appears at the measurement distance dist [m] of the target point, by calculating the probability that the point appears within the point-to-point distance rdist [m], the average and variance of the probability density function at each measurement distance are calculated.

Here, a description will be given of calculating the average "$E(X)$" (= $\mu$) and the variance "$V(X)$" (= $\sigma^2$) of the probability density function "$f(x)$" according to the expression (1) at the measurement distance dist of the target point. The measured distance of the reference point is herein set as "nd". Here, the symbol "y" (= rdist = dist - nd) denotes the difference between the measurement distance dist of the target point and the measurement distance nd of the reference point, and, symbol "gate" denotes the gate length. The appearance frequency (number of appearances) of the noise points of the distance y is denoted by "hist (dist - nd)".

In this case, the following expressions (2) to (4) are established.

[Math 2]

$$dist - gate < y \leq dist \qquad (2)$$

$$x = 2^{-a*(y)} \qquad (3)$$

$$f(x) = \frac{hist(dist - nd)}{gate} \qquad (4)$$

Then, in this instance, the average "coeff$_{ave}$" of the probability density function f (x) is expressed by the following expression (5), and the variance "coeff$_{var}$" of the probability density function f (x) is expressed by the following expression (6).

[Math 3]

$$coeff_{ave} = \sum_t \sum_h \sum_v 2^{-a*(b*t + (c\times dist\times \sin(0.4\pi h/360)+d\times dist\times \sin(0.8\pi v/360)))} \qquad (5)$$

$$coeff_{var} = \sum_t \sum_h \sum_v (2^{-a*(b*t + (c\times dist\times \sin(0.4\pi h/360)+d\times dist\times \sin(0.8\pi v/360)))})^2 \qquad (6)$$

Then, in this case, the average E(X) can be obtained according to the following expression (7), and the variance V(X) can be obtained according to the following expression (8).

[Math 4]

$$E(X) = \int_{-\infty}^{\infty} xf(x)dx = coeff_{ave} \times \int_{dist-gate}^{dist} \frac{2^{-a*(y)}}{\frac{hist(dist - nd)}{gate}} dy \qquad (7)$$

$$V(X) = \int_{-\infty}^{\infty} (x - E(X))^2 f(x)dx = coeff_{var} \times \int_{dist-gate}^{dist} \left( \frac{2^{-a*(y)}}{\frac{hist(dist - nd)}{gate}} - E(X) \right)^2 dy \qquad (8)$$

It is noted that the integration in the expressions (7) and (8) is performed using a predetermined bin width (e.g., 1m) since the discrete value is used in practice.

As described above, based on the point cloud information acquired when there is no object in the field of view of the lidar 100, the point cloud information processing block 73 calculates the average E (X) (= $\mu$) and variance V (X) (= $\sigma^2$) of the probability density function f (x) according to the above-mentioned expression (2) to expression (8), and stores them in the memory 8 or the like as probability density function information. Then, in the noise determination process, the point cloud information processing block 73 can suitably set the threshold value Th to realize a desired noise detection rate by referring to the probability density function information.

The point cloud information for calculating the probability density function information may be point cloud information acquired by the lidar 100 before performing the noise determination process, or may be point cloud information preliminarily acquired by the lidar 100 or any other similar lidar before product shipment. In the former case, for example, the lidar 100 generates the point cloud information that does not include an object point through the generation process of the above-described point cloud information while facing such a direction in which there is no object such as sky. In yet another example, the previously acquired point cloud information is given as the initial state, and using the determination result of the presence or absence of the object point in the past frame, the lidar 100 identifies the scanning points other than object points from the frame in real time and uses the point cloud information corresponding to the identified scanning points to calculate the probability density function information.

(3) Processing Flow

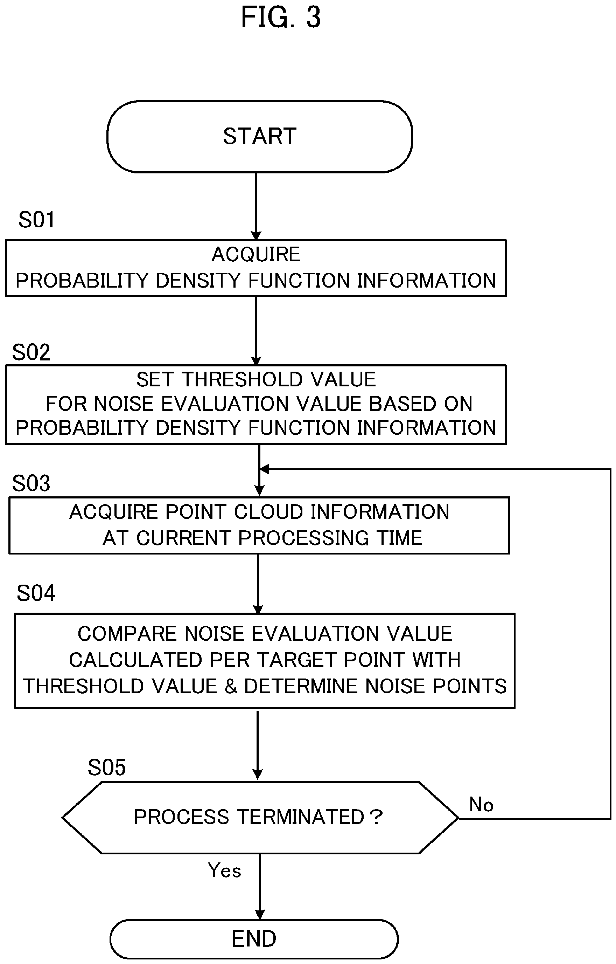

FIG. 3 is an example of a flowchart illustrating a procedure of the process (point cloud information process) related to the point cloud information executed by the lidar 100.

First, the point cloud information processing block 73 acquires the probability density function information (step S01). In this case, the point cloud information processing block 73 acquires the probability density function representing the average $\mu$ and variance (standard deviation) $\sigma$ of the probability density function of the noise evaluation function from the memory 8. At step S01, the point cloud information processing block 73 may perform a process of acquiring the point cloud information when there is no object in the field of view of the lidar 100 and generating the probability density function information based on the point cloud information.

Next, the point cloud information processing block 73 sets a threshold value Th for the noise evaluation value on the basis of the probability density function information (step S02). In this instance, the point cloud information processing block 73 uses the average $\mu$ and variance (standard deviation) $\sigma$ included in the probability density function information to set a threshold value Th for realizing a desired noise detection rate. In this case, for example, information representing the relation between the threshold value Th and a set of the average $\mu$ and the variance (standard deviation) $\sigma$ is stored in advance in the memory 8.

Then, the point cloud information processing block 73 compares the noise evaluation value calculated for each target point with the threshold value Th and determines the noise points in the current frame (step S04). In this case, the point cloud information processing block 73 sets each measured point in the current frame as the target point in order, and then calculates the noise evaluation value for the target point, with reference to expression (1), using the current frame and the past frames. Then, the point cloud information processing block 73 determines that the target point having the noise evaluation value equal to or larger than the threshold value Th is an object point while determining that the target point having the noise evaluation value less than the threshold value Th is a noise point.

Then, the point cloud information processing block 73 determines whether or not to terminate the point cloud information process (step S05). For example, upon receiving a request to stop generating the point cloud information or a request to stop the lidar 100, the point cloud information processing block 73 determines that the point cloud information process should be terminated. Then, if the point cloud information process should be terminated (step S05; Yes), the point cloud information processing block 73 terminates the process of the flowchart. On the other hand, if the point cloud information process should be continued (step S05; No), the point cloud information processing block 73 gets back to the process at step S03 and updates the current processing time to the subsequent processing time, and executes the processes at step S03 and step S04.

As described above, the information processing device 1 according to the first embodiment functions as an information processing device equipped with an acquisition unit, an evaluation value calculation unit, and a noise determination unit. The acquisition unit is configured to acquire point cloud data which is a set of data for each point measured by a measurement device. The evaluation value calculation unit is configured to calculate a noise evaluation value for each data of the point cloud data, based on a noise evaluation function for evaluating whether the each point is an object point, which is a measured point of an object, or a noise point, which is generated by noise. The threshold value setting unit is configured to set a threshold value for the noise evaluation value, based on a statistic of a probability density function of the noise evaluation function. The noise determination unit is configured to determine the noise point included in the point cloud data, based on the noise evaluation value and the threshold value. According to this aspect, the information processing device 1 sets the threshold value based on the probability of measuring the noise, which allows for accurately determining the noise point.

<Second Embodiment>

In the second embodiment, the point cloud information processing block 73 sets the spatiotemporal search range (i.e., the value range of each index t, h, v with respect to the target point) in calculating the noise evaluation function, based on the reflection intensity value (i.e., luminance) measured at each measured point. Specifically, if the reflection intensity value of the target point is equal to or larger than a predetermined threshold value, the point cloud information processing block 73 assumes that the reliability of the target point as an object point is high and limits the search range. Thus, the point cloud information processing block 73 executes the noise determination process with high accuracy while suppressing the calculation amount for calculating the noise evaluation function. Hereinafter, the same components as in the first embodiment are appropriately denoted by the same reference numerals, and a description thereof will be omitted. The point cloud information processing block 73 according to the second embodiment functions as the "acquisition unit", the "evaluation value calculation unit", the "noise determination unit", and a computer configured to execute a program.

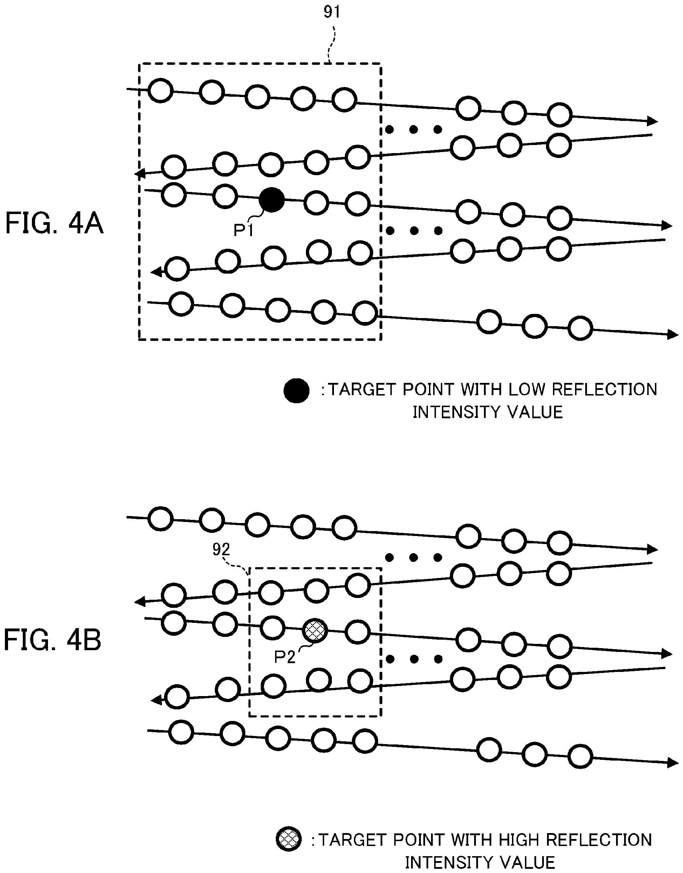

FIG. 4A is a diagram showing a target point P1 having a reflection intensity value smaller than the threshold value and its neighboring measured points at the current frame on a virtual plane which faces the lidar 100. The virtual plane shows each measured point at a position in accordance with the corresponding vertical and horizontal measurement direction. Further, FIG. 4B is a diagram showing a target point P2 having a reflection intensity value equal to or larger than the threshold value and its neighboring measured points at the current frame on the virtual plane. The broken line frame 91 indicates the spatial search range to be set for the target point P1, the broken line frame 92 indicates the spatial search range to be set for the target point P2. For example, the above-described threshold value is previously stored in the memory 8 or the like, and is set to a suitable value in consideration of the relation between the reflection intensity value and the reliability as an object point.

Since the reflection intensity value of the target point P1 shown in FIG. 4A is smaller than the threshold value, the normal-scale search area centered at the target point P1 is set in the calculation of the noise evaluation value of the target point P1. In FIG. 4A, the horizontal index h has a value range with the length of two on the right side and two on the left side with respect to the target point P1, the vertical index v has a value range with the length of two on the upper side and two on the lower side with respect to the target point P1. The value range of the frame index t (not shown) is also set so that a predetermined number (here, two) of the most recent past frames are used for calculating the noise evaluation value. Then, the point cloud information processing block 73 regards the points (74 points in this case) within the normal-scale search range set in the space and time as the reference points, and performs calculation of the noise evaluation value. As described above, the search range includes both the spatial range related to the measurement direction, which is determined by the value ranges of the horizontal index h and the vertical index v, and the time range related to the measurement time, which is determined by the value range of the frame index t.

On the other hand, since the target point P2 shown in FIG. 4B has the reflection intensity value equal to or larger than the threshold value, the reduced-scale search area centered at the target point P2 is set in calculating the noise-evaluation value of the target point P2. In FIG. 4B, the horizontal index h has a value range with the length of one on the right side and one on the left side with respect to the object point P1, the vertical index v has a value range with the length of one on the upper side and one on the lower side with respect to the object point P1. The value range of the frame index t (not shown) is also set so that a predetermined number (the number of frames smaller than the predetermined number of frames used in the example of FIG. 4A, and one herein) of the most recent past frames are used for calculating the noise evaluation value. Then, the point cloud information processing block 73 regards points (here, 26 points) within the normal-scale search range set in the space and time as the reference points, and calculates the noise evaluation value.

Thus, if the reflection intensity value of the target point is equal to or larger than the threshold value, the point cloud information processing block 73 sets a smaller search range (value range of each index t, h, and v) in the time and space set with reference to the target point of the current frame in the calculation of the noise evaluation value of the target point than the normal search range. Thus, it is possible to reduce the number of reference points used for the target point having a high degree of reliability as an object point, and suitably reduce the amount of computation required for calculating the noise evaluation value.

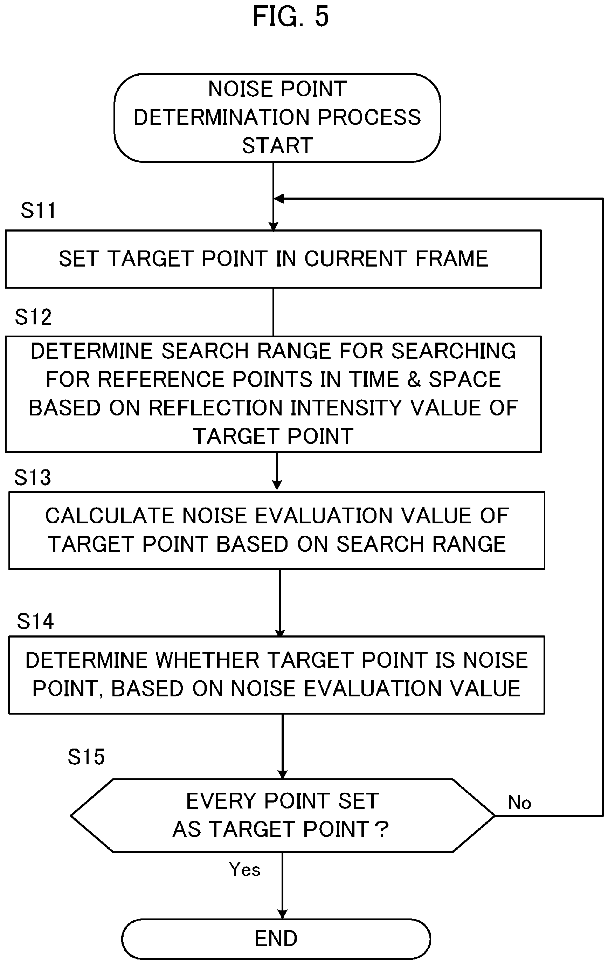

FIG. 5 is an example of a flowchart showing the procedure of the noise point determination process according to the second embodiment. For example, the point cloud information processing block 73 executes this process of this flowchart at step S04 in the flowchart shown in FIG. 3.

First, the point cloud information processing block 73 sets the target point in the current frame (step S 11). In this case, the point cloud information processing block 73 sets a measured point for which the noise evaluation value is not calculated in the current frame as the target point.

Next, the point cloud information processing block 73 determines a search range for searching for reference points in space and time based on the reflection intensity value of the target point (step S12). In this case, for example, if the reflection intensity value is smaller than the threshold value, the point cloud information processing block 73 sets the normal-scale search range. In contrast, if the reflection intensity value is equal to or larger than the threshold value, the point cloud information processing block 73 sets the reduced-scale search range.

Then, the point cloud information processing block 73 calculates the noise evaluation value of the target point based on the search area set at step S12 (step S13). In this case, the point cloud information processing block 73 calculates the noise evaluation value based on the expression (1) using the values of indices h, v, and t within the set search range.

Then, the point cloud information processing block 73 determines whether or not the target point is a noise point (or an object point) based on the noise evaluation value calculated at step S13 (step S14). In this instance, the point cloud information processing block 73 determines whether or not the target point is a noise point, for example, based on a comparison result between the threshold value Th set according to the first embodiment and the noise evaluation value.

Then, the point cloud information processing block 73 determines whether or not every point in the current frame has been set to the target point (step S 15). Then, if every point in the current frame have been set to the target point (step S15; Yes), the point cloud information processing block 73 determines that the noise determination process on the current frame has been completed, and ends the process of the flowchart. On the other hand, upon determining that there is any point in the current frame that are not set to the target point (step S15; No), the point cloud information processing block 73 gets back to the process at step S11 and sets a point in the current frame that is not set to the target point as the target point.

Instead of determining the search range based on the reflection intensity value of the target point, or in addition to this, the point cloud information processing block 73 may determine the search range based on the measurement distance of the target point. In general, the probability that the distance to an object can be measured decreases as the object exists farther, and the reliability that the distance to an object which exists in the short distance to some extent can be measured is high. Therefore, the point cloud information processing block 73 sets the reduced-scale search range if the measurement distance of the target point is less than the threshold value. Even in this case, the point cloud information processing block 73 can execute the noise determination process with high accuracy while suppressing the calculation amount for calculating the noise evaluation function.

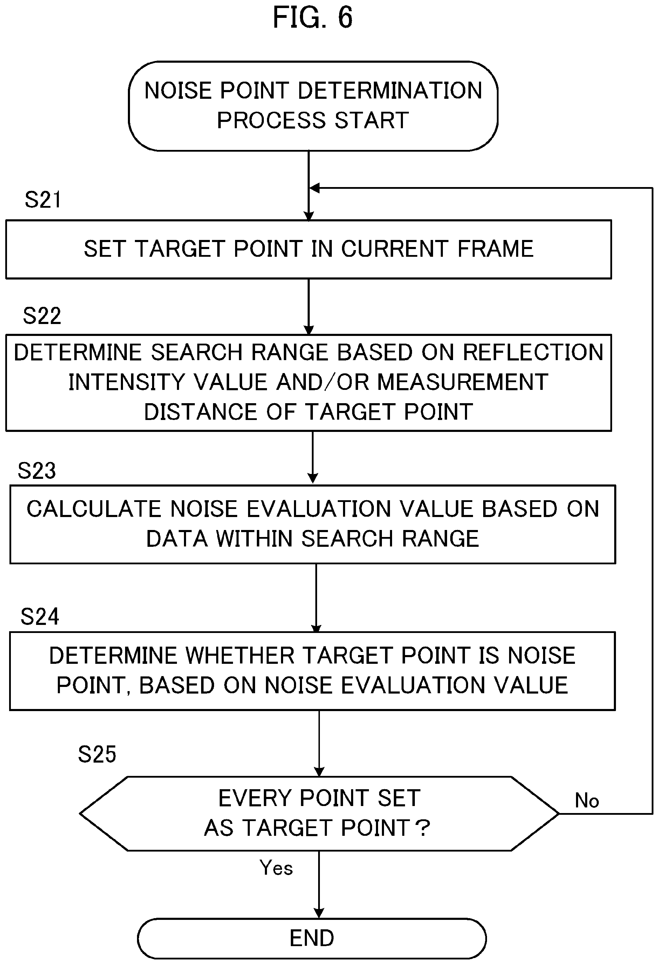

FIG. 6 is an example of a flowchart showing the procedure of the noise point determination process according to the second embodiment in consideration of the measurement distance of the target point.

First, the point cloud information processing block 73 sets the target point in the current frame (step S21). Next, the point cloud information processing block 73 determines a search range for searching for reference points in the time and space of the target point, based on at least one of the reflection intensity value of the target point and/or the measured distance (step S22). In this case, for example, the point cloud information processing block 73 may set the reduced-scale search range if the reflection intensity value is equal to or greater than a threshold value (first threshold value), or may set the reduced-scale search range if the measurement distance is less than a threshold value (second threshold). In another example, the point cloud information processing block 73 may set the reduced-scale search range if the reflection intensity value of the target point is equal to or larger than the first threshold value and the measurement distance is less than the second threshold value. Instead, the point cloud information processing block 73 may set the reduced-scale search range if the reflection intensity value of the target point is equal to or larger than the first threshold value or the measurement distance is less than the second threshold value. Then, the point cloud information processing block 73 executes the processes at step S23 to step S25 in the same manner as in the processes at step S13 to step S 15.

As described above, the information processing device 1 according to the second embodiment functions as an information processing device equipped with an acquisition unit and an evaluation value calculation unit. The acquisition unit is configured to acquire point cloud data which is a set of data indicative of a reflection intensity value and a measurement distance for each point measured by a measurement device. The evaluation value calculation unit is configured to calculate a noise evaluation value of a target point, which corresponds to each data, based on a noise evaluation function, wherein the noise evaluation function evaluates whether the target point is an object point, which is a measured point of an object, or a noise point, which is generated by noise, based on data of reference points existing in a search range set with reference to the target point. In this case, the evaluation value calculation unit is configured to determine the above-described search range based on at least one of the reflection intensity value and/or the measurement distance corresponding to the target point. Thus, the information processing device 1 can execute the noise determination process with high accuracy while suppressing the calculation amount for calculating the noise evaluation function.

<Third Embodiment>

In the third embodiment, in such a case where the lidar 100 is fixedly installed outdoors or indoors, the point cloud information processing block 73 sets a spatiotemporal search range in calculating the noise evaluation function based on the density of the object points in the past frame (also referred to as "preceding frame") acquired one processing time before the current processing time. Specifically, the point cloud information processing block 73 samples measured points in the preceding frame corresponding to measurement directions which are identical or similar to the measurement direction of the target point according to a predetermined rule. Then, the point cloud information processing block 73 sets a reduced-scale search range with respect to the target point when the proportion (also referred to as "object point proportion") of object points to the sampled measured points (also referred to as "sample points") is equal to or larger than a predetermined threshold value. Thus, the point cloud information processing block 73 suitably reduces the search range of the target point having a high probability of being an object point to thereby reduce the calculation amount for the noise evaluation value. The point cloud information processing block 73 according to the third embodiment functions as the "acquisition unit", the "evaluation value calculation unit", the "noise determination unit", and a computer configured to execute a program. Further, as described later, the process according to the third embodiment can be performed in combination with the process according to the second embodiment. Further, if the lidar 100 is capable of obtaining information from other sensors, it is not necessarily fixedly installed. In this case, the lidar 100 corrects the position indicated by point cloud information according to the movement amount of the lidar 100.

In general, when the lidar 100 is fixedly installed, a stationary structural object existing in the field of view of the lidar 100 is continuously measured in a particular measurement direction as a mass of object points in each frame. Therefore, in the measurement direction in which the object points exist densely in the past frame, there is a high possibility that the same object is measured even in the current frame. Taking the above into consideration, the point cloud information processing block 73 determines the reliability of the target point as an object point based on the density of the object points in the preceding frame in the measurement direction of the target point and determines the size of the search range regarding the target point according to the reliability. Thus, the point cloud information processing block 73 can perform the reduction of the processing amount while maintaining the discrimination accuracy of the object point from the noise point.

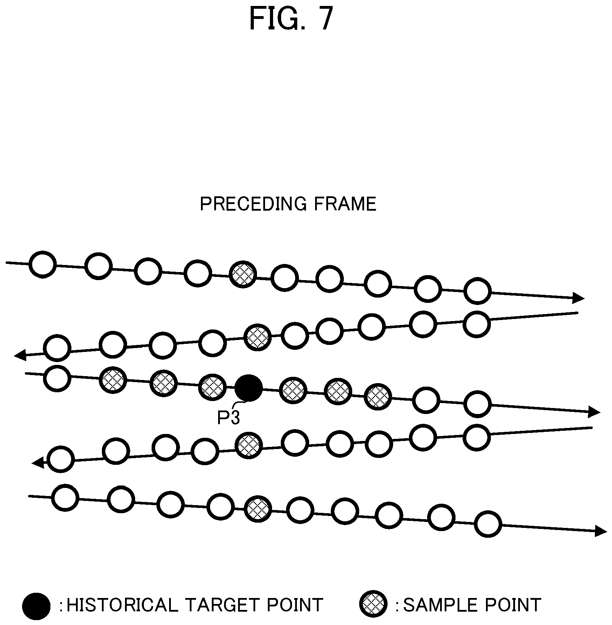

FIG. 7 is a diagram illustrating a measured point (historical target point) P3, which exists in the same measurement direction in the preceding frame as the target point, and its neighboring measured points on a virtual plane. Further, in FIG. 7, sample points used for the calculation of the object point proportion are clearly indicated by hatching.

In this example, the point cloud information processing block 73 sets sample points in a cross shape centered at the historical target point P3 that exists in the same measurement direction (i.e., the same scan point) as the target point. In other words, the point cloud information processing block 73 sets, as the sample points, the measured points in the preceding frame in the measurement directions, which are identical to the target point in the horizontal direction and similar to the target point in the vertical direction and the measured points in the preceding frame in the measurement directions, which are identical to the target point in the vertical direction and similar to the target point in the horizontal direction. Specifically, the point cloud information processing block 73 sets the sample points to be two upper and two lower measured points aligned with the historical target point P3 in the vertical direction, and three left and three right measured points aligned with the historical target point P3 in the horizontal direction.

Then, the point cloud information processing block 73 calculates a proportion of sample points which are determined to be object points to ten sample points in total as the object point proportion. Then, upon determining that the object point proportion is equal to or larger than a predetermined proportion, the point cloud information processing block 73 determines that the object points around the historical target point P3 is dense and therefore set the reduced-scale search range (e.g., refer to FIG. 4B) with respect to the target point. On the other hand, upon determining that the object point proportion is smaller than the predetermined ratio, the point cloud information processing block 73 determines that the object points around the historical target point P3 are rough (sparse), and sets the normal-scale search range (e.g., see FIG. 4A) with respect to the target point. Each search range described above, as in the second embodiment, includes both a spatial range relating to the measurement direction and a time range relating to the measurement time.

As described above, the point cloud information processing block 73 can calculate the object point proportion in which the degree of density in the vicinity of the same measurement direction as the target point in the past frame is accurately reflected by determining the sample points based on cross search centered at the past target point in the past frame.

Instead of determining the sample points based on the cross search, the point cloud information processing block 73 can determine the sample points which are effective in determining the density of the object points based on another search rule.

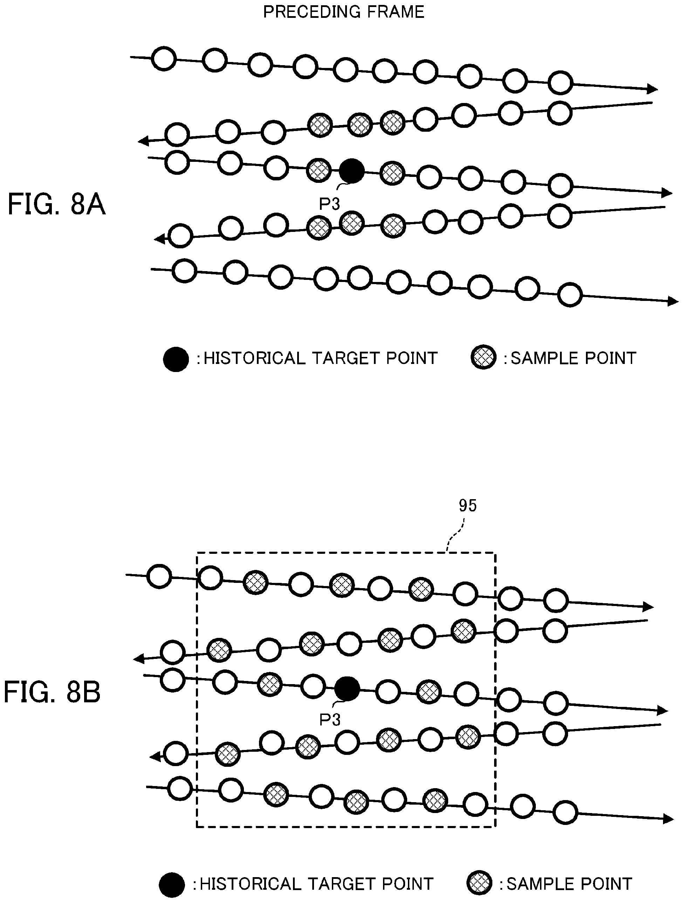

FIG. 8A is a diagram representing the arrangement of the sample points with respect to the historical target point P3 determined based on the second method. Here, sample points are specified by hatching. In the second method, the point cloud information processing block 73 defines eight measured points adj acent horizontally, vertically, or diagonally to the historical target point P3 as sample points. Then, the point cloud information processing block 73 calculates the proportion of sample points that are determined to be the object points to the total eight sample points as the object point proportion, and sets the size of the search range according to the object point proportion.

FIG.8B is a diagram showing the arrangement of the sampled points with respect to the historical object point P3 determined based on the third method. Here, sample points are specified by hatching. In the third method, the point cloud information processing block 73 sets a predetermined-scaled frame 95 centered at the historical target point P3 and determines a total of 16 sample points by sampling according to a predetermined rule from the measured points within the frame 95 in the past frame. Here, the frame 95 indicates a rectangular area including three left, three right, two upper, two lower measured points with respect to the historical target point P3. Then, the point cloud information processing block 73 calculates the proportion of the sample points that are determined to be object points to the total 16 sample points as the object point proportion, and sets the size of the search range according to the object point proportion.

As described above, the point cloud information processing block 73 can calculate the object point proportion in consideration of the degree of density of the object points in the past frame, based on the sample points determined according to any method other than the cross search and accurately determine the search range of the target point.

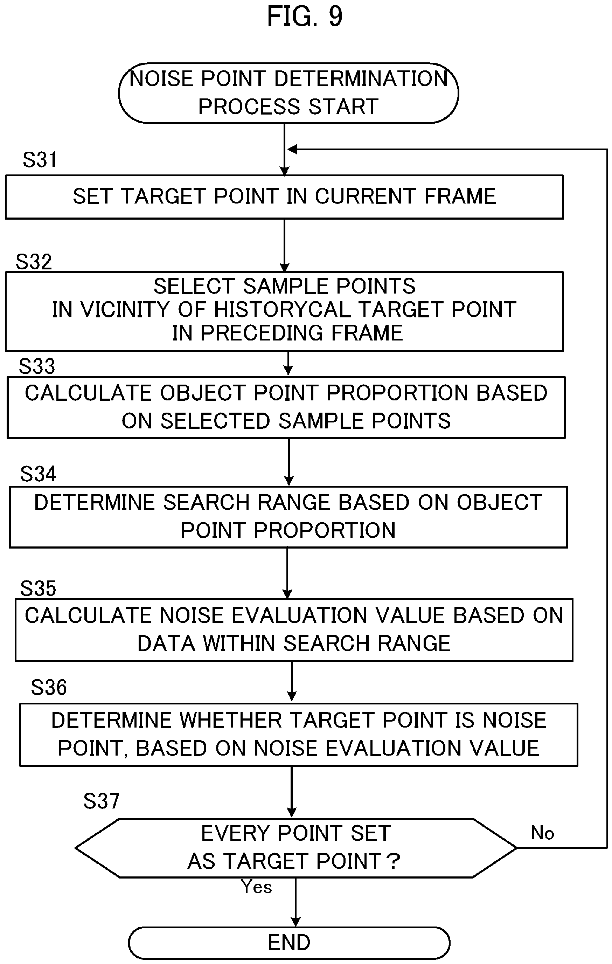

FIG. 9 is an example of a flowchart showing the procedure of the noise point determination process according to the third embodiment. For example, the point cloud information processing block 73 executes the process of this flowchart at step S04 in the flowchart shown in FIG. 3.

First, the point cloud information processing block 73 sets the target point in the current frame (step S31). Next, the point cloud information processing block 73 selects sample points existing in the vicinity of the historical target point having the same measurement direction as the target point in the preceding frame (step S32). In this case, for example, the point cloud information processing block 73 selects the sample points in the preceding frame according to the rules illustrated in FIG. 7 or FIG. 8A or FIG. 8B.

Next, the point cloud information processing block 73 calculates the object point proportion based on the sampled points selected at step S32 (step S33). Then, the point cloud information processing block 73 determines the search area for searching for the reference points in space and time based on the object point proportion (step S34). In this case, for example, the point cloud information processing block 73 sets the normal-scale search range if the object point proportion is less than the threshold value, and sets the reduced-scale search range if the object point proportion is equal to or larger than the threshold value.

Then, the point cloud information processing block 73 calculates the noise evaluation value of the target point based on the search area set at step S34 (step S35). In this case, the point cloud information processing block 73 calculates the noise evaluation value based on the expression (1) using the values of the indices h, v, and t within the set search range.

Then, the point cloud information processing block 73 determines whether or not the target point is a noise point (or an object point) based on the noise evaluation value calculated at step S35 (step S36). In this instance, the point cloud information processing block 73 determines whether or not the target point is a noise point based on, for example, a comparison result between the threshold value Th set according to the first embodiment and the noise evaluation value.

Then, the point cloud information processing block 73 determines whether or not every point in the current frame has been set to the target point (step S37). Then, if every point in the current frame has been set to the target point (step S37; Yes), the point cloud information processing block 73 determines that the noise determination process on the current frame has been completed, and ends the process of the flowchart. On the other hand, upon determining that there is a point in the current frame that has not been set to the target point (step S37; No), the point cloud information processing block 73 gets back to the process at step S31 and sets the point in the current frame that has not been set to the target point as the target point.

In some embodiments, the point cloud information processing block 73 may execute the third embodiment in combination with the second embodiment.

In this case, as a first example, the point cloud information processing block 73 limits the search range based on the reflection intensity value or the determination result of the density at the past target point. In this case, depending on the situation, the point cloud information processing block 73 may switch whether to limit the search range based on the reflection intensity value of the target point or to limit the search range based on the determination result of the density at the past target point. For example, the point cloud information processing block 73 limits the search range based on the reflection intensity value of the target point, if a predetermined condition that is determined to be appropriate to limit the search range based on the reflection intensity value of the target point is satisfied. On the other hand, if the predetermined condition that is determined to be appropriate to limit the search range based on the determination result of the density at the past target point is satisfied, the point cloud information processing block 73 limits the search range based on the determination result of the density at the past target point.

In the second example, the point cloud information processing block 73 limits the search range based on the reflection intensity value of the target point while limiting the search range based on the determination result of the density at the past target point. In this case, upon determining that the reflection intensity value of the target point is equal to or larger than the threshold value or upon determining that the past target point is dense, the point cloud information processing block 73 sets the reduced-scale search range. According to these examples, the point cloud information processing block 73 can reduce the calculation processing amount by suitably limiting the search range.

As described above, the information processing device 1 according to the third embodiment functions as an information processing device equipped with an acquisition unit and an evaluation value calculation unit. The acquisition unit is configured to acquire point cloud data which is a set of data representing points measured by a measurement device for each measurement direction. The evaluation value calculation unit is configured to calculate a noise evaluation value of a target point, which corresponds to each data acquired at the current processing time, based on a noise evaluation function, wherein the noise evaluation function evaluates whether the target point is an object point, which is a measured point of an object, or a noise point, which is generated by noise, based on data of reference points existing in a search range set with reference to the target point. In this case, the evaluation value calculation unit is configured to determine the search range on the basis of the density of object points at a processing time before the current processing time in the measurement direction of the target point. Thus, the information processing device 1 can execute the noise determination process with high accuracy while suppressing the calculation amount for calculating the noise evaluation function.

<Fourth Embodiment>

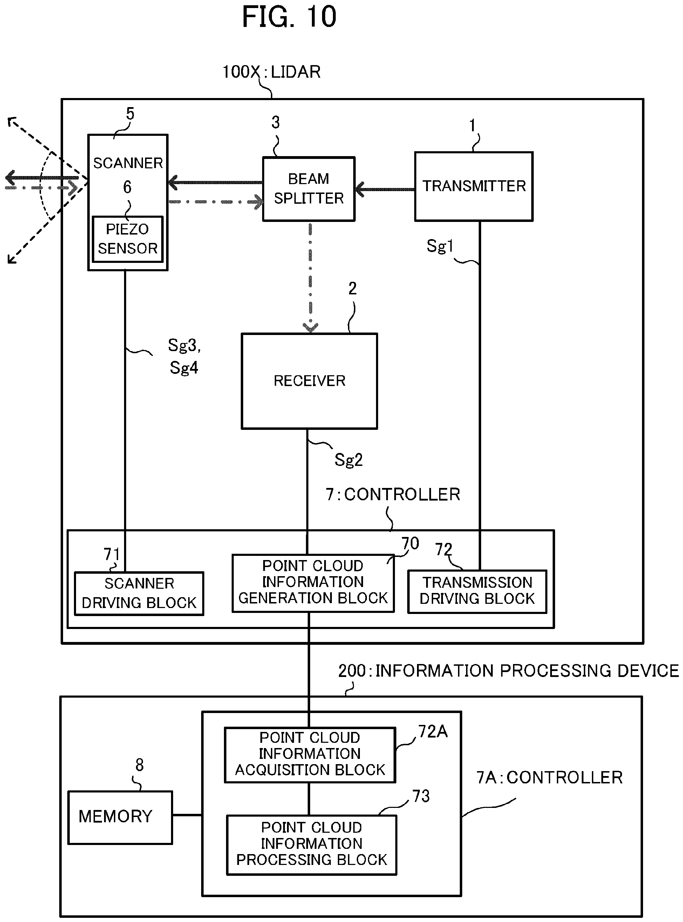

FIG. 10 is a configuration diagram of a lidar system according to a fourth embodiment. In the fourth embodiment, a device separate from the lidar 100X is equipped with the function corresponding to the point cloud information processing block 73 and the point cloud information processing block 73 of the controller 7. Hereafter, the same components in the fourth embodiment as in the first embodiment to the third embodiment are appropriately denoted by the same reference numerals as in the embodiments, and a description thereof will be omitted.

The lidar system according to the fourth embodiment includes a lidar 100X and an information processing device 200. In this instance, the lidar 100X supplies the point cloud information generated by the point cloud information generation block 72 to the information processing device 200.

The information processing device 200 includes a controller 7A and memory 8. The memory 8 stores the data required for the controller 7A to execute the process. The controller 7A functionally includes a point cloud information acquisition block 72A and a point cloud information processing block 73. The point cloud information acquisition block 72A receives the point cloud information generated by the point cloud information generation block 72 of the lidar 100X, and supplies the received point cloud information to the point cloud information processing block 73. The point cloud information processing block 73 performs the same process as the point cloud information processing block 73 does according to the above-described embodiments on the point cloud information supplied from the point cloud information acquisition block 72A.

The information processing device 200 may be realized by a driving support device. The information regarding the parameters necessary for processing may be stored in another device having a memory that can be referenced by the information processing device 200. According to the configuration of this modification, the information processing device 200 can also accurately process the point cloud information generated by the lidar 100X.

In the embodiments described above, the program is stored by any type of a non-transitory computer-readable medium (non-transitory computer readable medium) and can be supplied to a control unit or the like that is a computer. The non-transitory computer-readable medium include any type of a tangible storage medium. Examples of the non-transitory computer readable medium include a magnetic storage medium (e.g., a flexible disk, a magnetic tape, a hard disk drive), a magnetic-optical storage medium (e.g., a magnetic optical disk), CD-ROM (Read Only Memory), CD-R, CD-R/W, a solid-state memory (e.g., a mask ROM, a PROM (Programmable ROM), an EPROM (Erasable PROM), a flash ROM, a RAM (Random Access Memory)).

While the present invention has been described with reference to the embodiments, the present invention is not limited to the above embodiments. Various modifications that can be understood by a person skilled in the art can be made to the configuration and details of the present invention within the scope of the present invention. Namely, the present invention includes, of course, various modifications that may be made by a person skilled in the art according to the entire disclosure including claims and technical ideas. In addition, all Patent and Non-Patent Literatures mentioned in this specification are incorporated by reference in its entirety.

DESCRIPTION OF REFERENCE NUMERALS

| | |
|---|---|
| 1 | Transmitter |
| 2 | Receiver |
| 3 | Beam splitter |
| 5 | Scanner |
| 6 | Piezo sensor |
| 7 and 7A | Controller |
| 8 | Memory |
| 100 and 100X | Lidar |
| 200 | Information processing device |

**Claims**

**1.** An information processing device comprising:

an acquisition unit configured to acquire point cloud data which is a set of data for each point measured by a measurement device;
an evaluation value calculation unit configured to calculate an evaluation value for each data of the point cloud data, based on an evaluation function for evaluating whether the each point is an object point, which is a measured point of an object, or a noise point, which is generated by noise;
a threshold value setting unit configured to set a threshold value for the evaluation value, based on a statistic of a probability density function of the evaluation function; and
a noise determination unit configured to determine the noise point included in the point cloud data, based on the evaluation value and the threshold value.

2. The information processing device according to claim 1,
wherein the threshold setting unit is configured to set the threshold value based on an average and variance of the probability density function.

3. The information processing device according to claim 1 or 2,

wherein the point cloud data is a set of data representing a measurement distance for the each point, and
wherein the evaluation function is a function which outputs the evaluation value based on

a difference in the measurement distance,
a difference in a measurement direction, and
a difference in a measurement time

between the each point of the point cloud data for calculating the evaluation value and a point of the point cloud data other than the each point.

4. The information processing device according to any one of claims 1 to 3,
wherein the evaluation value calculation unit is configured to calculate the evaluation value based on

a current frame which is the point cloud information acquired by the acquisition unit at a current processing time,
a past frame which is the point cloud information acquired by the acquisition unit at a time before the current processing time, and
the evaluation function.

5. The information processing device according to any one of claims 1 to 4, further comprising

a storage unit configured to store the statistic,
wherein the threshold setting unit is configured to set the threshold value based on the statistic stored in the storage unit.

6. The information processing device according to any one of claims 1 to 5, further comprising
a statistic calculation unit configured to calculate the statistic based on the point cloud information generated when there is no object in a measurement range of the measurement device.

7. A control method executed by the information processing device, the control method comprising:

acquiring point cloud data which is a set of data for each point measured by a measurement device;
calculating an evaluation value for each data of the point cloud data, based on an evaluation function for evaluating whether the each point is an object point, which is a measured point of an object, or a noise point, which is generated by noise;
setting a threshold value for the evaluation value, based on a statistic of a probability density function of the evaluation function; and
determining the noise point included in the point cloud data, based on the evaluation value and the threshold value.

8. A program causing a computer to:

acquire point cloud data which is a set of data for each point measured by a measurement device;
calculate an evaluation value for each data of the point cloud data, based on an evaluation function for evaluating whether the each point is an object point, which is a measured point of an object, or a noise point, which is generated by noise;

15

set a threshold value for the evaluation value, based on a statistic of a probability density function of the evaluation function; and

determine the noise point included in the point cloud data, based on the evaluation value and the threshold value.

9. A storage medium storing the program according to claim 8.

# FIG. 1

100 : LIDAR

# FIG. 2

THRESHOLD VALUE Th

DETERMINED AS NOISE 99.7%  DETERMINED AS OBJECT
0.3%

PROBABILITY DENSITY
FUNCTION

$\mu$      $\mu+3\sigma$

# FIG. 3

START

S01

ACQUIRE
PROBABILITY DENSITY FUNCTION INFORMATION

S02

SET THRESHOLD VALUE
FOR NOISE EVALUATION VALUE BASED ON
PROBABILITY DENSITY FUNCTION INFORMATION

S03

ACQUIRE POINT CLOUD INFORMATION
AT CURRENT PROCESSING TIME

S04

COMPARE NOISE EVALUATION VALUE
CALCULATED PER TARGET POINT WITH
THRESHOLD VALUE & DETERMINE NOISE POINTS

S05

PROCESS TERMINATED ? — No

Yes

END

FIG. 4A

91

P1

● : TARGET POINT WITH LOW REFLECTION
INTENSITY VALUE

FIG. 4B

92

P2

⊗ : TARGET POINT WITH HIGH REFLECTION
INTENSITY VALUE

# FIG. 5

NOISE POINT
DETERMINATION PROCESS
START

S11

SET TARGET POINT IN CURRENT FRAME

S12

DETERMINE SEARCH RANGE FOR SEARCHING
FOR REFERENCE POINTS IN TIME & SPACE
BASED ON REFLECTION INTENSITY VALUE OF
TARGET POINT

S13

CALCULATE NOISE EVALUATION VALUE OF
TARGET POINT BASED ON SEARCH RANGE

S14

DETERMINE WHETHER TARGET POINT IS NOISE
POINT, BASED ON NOISE EVALUATION VALUE

S15

EVERY POINT SET
AS TARGET POINT ?

No

Yes

END

# FIG. 6

NOISE POINT DETERMINATION
PROCESS START

S21

SET TARGET POINT IN CURRENT FRAME

S22

DETERMINE SEARCH RANGE BASED ON REFLECTION
INTENSITY VALUE AND/OR MEASUREMENT
DISTANCE OF TARGET POINT

S23

CALCULATE NOISE EVALUATION VALUE BASED ON
DATA WITHIN SEARCH RANGE

S24

DETERMINE WHETHER TARGET POINT IS NOISE
POINT, BASED ON NOISE EVALUATION VALUE

S25

EVERY POINT SET
AS TARGET POINT?　　　No

Yes

END

# FIG. 7

PRECEDING FRAME

P3

● :HISTORICAL TARGET POINT ⊗ :SAMPLE POINT

PRECEDING FRAME

FIG. 8A

P3

● :HISTORICAL TARGET POINT  ⊗ :SAMPLE POINT

95

FIG. 8B

P3

● :HISTORICAL TARGET POINT  ⊗ :SAMPLE POINT

# FIG. 9

```
        ( NOISE POINT DETERMINATION )
        (    PROCESS START           )
```

S31
```
┌─────────────────────────────────────────────────┐
│         SET TARGET POINT IN CURRENT FRAME        │
└─────────────────────────────────────────────────┘
```

S32
```
┌─────────────────────────────────────────────────┐
│               SELECT SAMPLE POINTS               │
│      IN VICINITY OF HISTORYCAL TARGET POINT       │
│                IN PRECEDING FRAME                 │
└─────────────────────────────────────────────────┘
```

S33
```
┌─────────────────────────────────────────────────┐
│   CALCULATE OBJECT POINT PROPORTION BASED         │
│          ON SELECTED SAMPLE POINTS                │
└─────────────────────────────────────────────────┘
```

S34
```
┌─────────────────────────────────────────────────┐
│   DETERMINE SEARCH RANGE BASED ON OBJECT          │
│                POINT PROPORTION                   │
└─────────────────────────────────────────────────┘
```

S35
```
┌─────────────────────────────────────────────────┐
│   CALCULATE NOISE EVALUATION VALUE BASED ON       │
│          DATA WITHIN SEARCH RANGE                 │
└─────────────────────────────────────────────────┘
```

S36
```
┌─────────────────────────────────────────────────┐
│   DETERMINE WHETHER TARGET POINT IS NOISE         │
│   POINT, BASED ON NOISE EVALUATION VALUE          │
└─────────────────────────────────────────────────┘
```

S37
```
        < EVERY POINT SET              >   No
        <  AS TARGET POINT ?           >
                    Yes
```

```
        (              END              )
```

# FIG. 10

100X : LIDAR

5

SCANNER
6

PIEZO
SENSOR

3

BEAM
SPLITTER

1

TRANSMITTER

Sg1

2

RECEIVER

Sg2

Sg3,
Sg4

7 : CONTROLLER

71

SCANNER
DRIVING BLOCK

70

POINT CLOUD
INFORMATION
GENERATION BLOCK

72

TRANSMISSION
DRIVING BLOCK

200 : INFORMATION PROCESSING DEVICE

72A

POINT CLOUD
INFORMATION
ACQUISITION BLOCK

73

POINT CLOUD
INFORMATION
PROCESSING BLOCK

7A : CONTROLLER

8

MEMORY

## INTERNATIONAL SEARCH REPORT

International application No.

**PCT/JP2022/046465**

### A. CLASSIFICATION OF SUBJECT MATTER

***G01S 7/497***(2006.01)i; ***G01C 3/06***(2006.01)i; ***G01S 17/06***(2006.01)i; ***G01S 17/89***(2020.01)i
FI: G01S7/497; G01C3/06 120Q; G01C3/06 140; G01S17/06; G01S17/89

According to International Patent Classification (IPC) or to both national classification and IPC

### B. FIELDS SEARCHED

Minimum documentation searched (classification system followed by classification symbols)

G01S7/48-7/51; G01S17/00-17/95; G01C3/06;

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | WO 2020/225894 A1 (NEC CORPORATION) 12 November 2020 (2020-11-12)<br>paragraphs [0021]-[0022], [0044]-[0045], [0049], [0051], [0056], fig. 2-5, 8-9 | 1-9 |
| A | JP 2011-185664 A (PANASONIC ELECTRIC WORKS CO LTD) 22 September 2011 (2011-09-22)<br>entire text, all drawings | 1-9 |
| A | JP 10-253760 A (HAMAMATSU PHOTONICS KK) 25 September 1998 (1998-09-25)<br>entire text, all drawings | 1-9 |
| A | WO 2020/092179 A1 (DJI TECHNOLOGY, INC.) 07 May 2020 (2020-05-07)<br>entire text, all drawings | 1-9 |

☐ Further documents are listed in the continuation of Box C.    ☑ See patent family annex.

| | |
|---|---|
| *   Special categories of cited documents:<br>"A"   document defining the general state of the art which is not considered to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
|---|---|
| **01 February 2023** | **14 February 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

| International application No. |
| --- |
| **PCT/JP2022/046465** |

| Patent document cited in search report | | | Publication date (day/month/year) | Patent family member(s) | | | Publication date (day/month/year) |
| --- | --- | --- | --- | --- | --- | --- | --- |
| WO | 2020/225894 | A1 | 12 November 2020 | US 2022/0187455 A1 paragraphs [0052]-[0053], [0081]-[0082], [0086], [0088]-[0089], [0095], fig. 2-5, 8-9 | | | |
| JP | 2011-185664 | A | 22 September 2011 | (Family: none) | | | |
| JP | 10-253760 | A | 25 September 1998 | (Family: none) | | | |
| WO | 2020/092179 | A1 | 07 May 2020 | CN 113015677 A | | | |

Form PCT/ISA/210 (patent family annex) (January 2015)

**EP 4 455 723 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021043838 A